Europäisches Patentamt

European Patent Office

Office européen des brevets

(11) Veröffentlichungsnummer: **0 387 720 B1**

# (12) EUROPÄISCHE PATENTSCHRIFT

(45) Veröffentlichungstag der Patentschrift: **01.12.93**

(51) Int. Cl.5: **H04B 7/26**

(21) Anmeldenummer: **90104519.5**

(22) Anmeldetag: **09.03.90**

(54) Schaltung zur Erkennung eines Frequenzreferenzsignals.

(30) Priorität: **16.03.89 EP 89104713**

(43) Veröffentlichungstag der Anmeldung:
**19.09.90 Patentblatt 90/38**

(45) Bekanntmachung des Hinweises auf die
Patenterteilung:
**01.12.93 Patentblatt 93/48**

(84) Benannte Vertragsstaaten:
**AT BE CH DE DK ES FR GB GR IT LI NL SE**

(56) Entgegenhaltungen:
**US-A- 4 358 737**

**IEEE INTERNATIONAL CONFERENCE ON COMMUNICATIONS, Toronto, 22.-25. Juni 1986, vol.3, Seiten 46.8.1 -46.8.6, IEEE, New York, US; P.A. Kennard et al.: "Fading dynamics in high spectral efficiency digital radio"**

(73) Patentinhaber: **SIEMENS AKTIENGESELL-SCHAFT**
**Wittelsbacherplatz 2**
**D-80333 München(DE)**

(72) Erfinder: **Ringelhaan, Otmar, Dipl-Ing.**
**Zugspitzstrasse 9**
**D-8919 Greifenberg(DE)**
Erfinder: **Fenske, Horst, Dipl.-Ing.**
**Lerchenauerstrasse 43**
**D-8000 München 40(DE)**
Erfinder: **Eichiner, Gerhard, Dipl.-Phys.**
**Josef-Lutz-Weg 35**
**D-8000 München 70(DE)**

## Beschreibung

Die Erfindung bezieht sich auf eine Schaltung zur Erkennung eines Frequenzreferenzsignals, das im Zeitmultiplex mit einem Nachrichtensignal ausgesendet wird.

Eine Schaltung dieser Art ist durch die US-A-4 358 737 bekannt. Diese beschreibt einen verbesserten Filter-Detektorkreis zum Prüfen von Eingangssignalen verschiedener Frequenzen und zum Bereitstellen eines Detektionssignals, wenn die Eingangsfrequenz einen gewünschten vorherbestimmten Wert hat. Der Schaltkreis ist geeignet für die Verwendung als Tondetektor für kontinuierlich tongesteuerte Squelch-Systeme.

Im Zusammenhang mit einem künftigen Mobilfunksystem ist vorgesehen, das Frequenznormal der Mobilstationen (MS) durch Aussenden einer Referenzfrequenz von den (ortsfesten) Basisstationen (BS) zu korrigieren. Das Frequenznormal einer Mobilstation muß korrigiert werden einmal, um die geforderte Präzision bei der Erzeugung der eigenen Sendefrequenz zu gewährleisten, zum anderen aber auch, um die Demodulation der empfangenen Nachricht zu erleichtern. Das Aussenden dieser Referenzfrequenz von der Basisstation erfolgt im Zeitmultiplex mit dem Nachrichtensignal in der Weise, daß abwechselnd über einen bestimmten Zeitraum (rd. 0,5 ms) die Referenzfrequenz und in dem darauffolgenden, längeren Zeitraum (rd 50 ms) das Nachrichtensignal ausgesendet wird. Dabei überträgt das Nachrichtensignal digitale Daten mit der Rate ft (z. B. ft = 271 kHz) und einer bestimmten Bandbreite (rd. 200 kHz). Die Referenzfrequenz in Form einer Sinusschwingung wird übertragen im Abstand von ft/4 oberhalb der Mitte des jeweiligen Übertragungsfrequenzbandes. Da zum Zeitpunkt der Frequenzkorrektur noch kein Synchronismus zwischen Basisstation und Mobilstation besteht, benötigt die Mobilstation eine Einrichtung, die auf die besondere Eigenart dieses sog. frequency correction bursts (FC-Burst) anspricht und eine möglichst genaue Aussage über dessen zeitliche Lage abgibt.

Der Erfindung liegt daher die Aufgabe zugrunde, für die Ermittlung der zeitlichen Lage eines im TDM-Rahmen zusammen mit einem Nachrichtensignal gesendeten Frequenzreferenzsignals eine Lösung anzugeben, bei deren Realisierung aufwendige Schaltungen und hohe Verarbeitungsgeschwindigkeiten vermieden werden.

Diese Aufgabe wird gemäß der Erfindung gelöst mit einer Schaltung, bestehend aus zwei Transversalfiltern, die der Unterscheidung zwischen Nachrichtensignal und FC-Burst (frequency correction burst) aus dem in eine ZF-Lage umgesetzten und periodisch abgetasteten Empfangssignal dienen und dafür so ausgebildet sind, daß der Übertragungsfaktor des einen Filters bei der FC-Frequenz ein Minimum aufweist, während derjenige des anderen dort ein Maximum hat, und ferner bestehend aus je einer Einrichtung zur Bildung des Quadratwertes der Filterausgangssignale und einer sich jeweils daran anschließenden Anordnung zur Bildung des gleitenden Mittelwertes über den Zeitraum einer Burstlänge und einer Einrichtung, in der die Ausgangsspannungen beider Pfade laufend zueinander ins Verhältnis gesetzt und der Zeitpunkt des Maximums ermittelt wird.

Vorteilhafte Ausgestaltungen und Weiterbildungen des Erfindungsgegenstandes sind in den Unteransprüchen angegeben.

Nachstehend wird die Erfindung anhand eines in der Zeichnung dargestellten Ausführungsbeispiels näher erläutert.

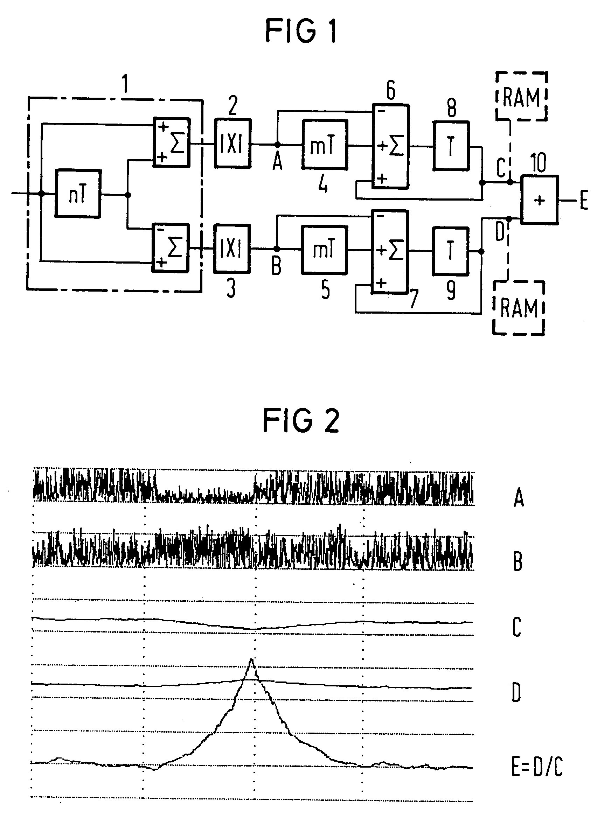

Die Figur 1 zeigt die Struktur eines matched filters, mit dem die Erkennungsschaltung realisiert ist. Diesem werden, nach erfolgter Umsetzung in eine geeignete Zwischenfrequenzlage und periodischer Abtastung des Empfangssignals die so gewonnenen Abtastwerte zugeführt. Im Hinblick auf eine möglichst einfache Schaltungstechnik sind die Zwischenfrequenzlage sowie die Abtastfrequenz so gewählt, daß der FC-Burst auf eine Frequenz umgesetzt wird, die mit jener Abtastfrequenz in einem rationalen Verhältnis steht. Bei einem bevorzugten Ausführungsbeispiel liegt die Zwischenfrequenz bei 2ft, der FC-Burst in dieser Frequenzlage demnach bei 9/4ft, und nach einer Abtastung mit einer Rate von ft' = 8/5ft (Bewertung jedes 5. Abtastwertes) bei 13/32ft'. Das Spektrum des Nachrichtensignals liegt dann im Bereich von 0 bis 1/2ft'.

Das matched filter enthält eingangsseitig zwei Transversalfilter (FIR-Filter = Finite Impulse Response) mit gemeinsamer Verzögerung nT (T = 1/ft') und den Koeffizienten +1, +1, bzw. +1, -1, die der eigentlichen Unterscheidung zwischen Nachrichtensignal und FC-Burst dienen. Diese Filter haben die Eigenschaft von Kammfiltern mit Übertragungsfaktoren $\cos(n \cdot \pi f/ft')$ bzw. $\sin(n \cdot \pi f/ft')$, also mit zueinander versetztem Durchlaß- und Sperrverhalten. Dabei ist der Faktor n so gewählt, daß der Übertragungsfaktor des einen Filters bei der FC-Frequenz ein Minimum aufweist, während derjenige des anderen dort ein Maximum hat. Bei dem oben angesprochenen Ausführungsbeispiel ergibt sich dies beispielsweise für n = 16. Dann hat bei der FC-Frequenz das sin-Filter den Übertragungsfaktor 1, während der Übertragungsfaktor des cos-Filters dort einen Nulldurchgang aufweist. Beim Nachrichtensignal mit rauschähnlichem Charakter geben beide Filter ungefähr die gleiche Ausgangsleistung ab, während bei Auftreten eines FC-Bursts stark unterschiedliche Ausgangsleistungen abgegeben werden. Dieser Sachverhalt wird in dem nachfolgenden Schaltungsteil des matched filters registriert.

Hierfür ist in jedem Pfad eine Anordnung von einem FIR- und IIR-Filter (IIR = Infinite Impulse Response) vorgesehen, bestehend aus einer Verzögerung 4 bzw. 5 (Verzögerungszeit mT), einer Summation 6 bzw. 7 sowie einer weiteren Verzögerung 8 bzw. 9, die die beiden Signale nach einer Einrichtung 2 bzw. 3 durchlaufen, in der an sich das Quadrat der Ausgangswerte der Transversalfilter zu bilden wäre, zur Vereinfachung der Anordnung jedoch eine Absolutwertbildung erfolgt. Diese Anordnung ist die rechenzeitsparende Version eines Transversalfilters mit rechteckiger Impulsantwort der Länge mT und liefert den gleitenden Mittelwert über diesen Zeitraum. Die Ausgangsspannungen beider Pfade werden laufend zueinander ins Verhältnis gesetzt, wofür die Divisionseinrichtung 10 vorgesehen ist. Mit mT entsprechend der Länge des FC-Bursts (0,5 ms) ergibt sich dort ein Extremwert zu dem Zeitpunkt, da der FC-Burst in seiner gesamten Länge wirksam geworden war, also am Übergang vom FC-Burst zum Nachrichtensignal. Es muß also nur noch der Zeitpunkt dieses Extremwertes (Maximum) ermittelt werden.

Um mögliche Schwierigkeiten bei der schaltungstechnischen Realisierung der hier in Echtzeit vorgesehenen Division zu umgehen, ist folgende Lösung vorgesehen: statt laufend mit hoher Auflösung zu dividieren, werden die Wertepaare (Mittelwerte) an den Eingänge C und D der Divisionseinrichtung 10 laufend in ein RAM (strichliert dargestellt) mit der Kapazität von ungefähr einer halben Burstlänge eingelesen und gleichzeitig miteinander verglichen. Die RAM-Eingabe wird gestoppt, sobald eine aus dem Vergleich abgeleitete Bedingung erfüllt ist. Diese Bedingung besteht darin, daß das laufende Verhältnis der Werte unter einen Schwellwert absinkt, nachdem dieser Schwellwert eine Mindestzeit vorher überschritten worden war. Dieser Schwellwert ist so bemessen, daß er einmal sicher unterhalb des bei der Division zu erwartenten Extremwertes liegt, andererseits - im Hinblick auf die erforderliche RAM-Kapazität - eine möglichst geringe Anzahl von Wertepaaren erfaßt. Auf diese Weise sind zu diesem Zeitpunkt im RAM nur Wertepaare gespeichert, die in unmittelbarer Nähe jenes Extremwertes liegen. Jetzt kann die Auswertung der abgespeicherten Wertepaare beginnen und muß prinzipiell erst dann abgeschlossen sein, wenn ein neuer FC-Burst empfangen werden soll. Die zeitliche Lage des FC-Bursts, d. h. sein genauer Zeitpunkt kann jetzt in Ruhe (non-real-time) aus der RAM-Adresse ermittelt werden, unter der das entsprechende Wertepaar abgespeichert war. Die statt der Division nun in Echtzeit erforderliche Schaltung kann mit erheblich geringerem Aufwand als jene realisiert werden. Im Anschluß an die Quotientenbildung kann ein weiteres FIR-Filter einer zusätzlichen Rauschunterdrückung dienen und damit die Präzision bei der Ermittlung der Burstphase noch verbessern.

Figur 2 zeigt in einer graphischen Darstellung die Signalverläufe für eine Schaltungssimulation und zwar nach Bildung der Absolutwerte an den Punkten A und B, nach Bildung der gleitenden Mittelwerte am Ausgang der Anordnung von FIR- und IIR-Filtern (Punkt C und D der Schaltung) und schließlich den Quotienten E = D/C, d. h. das Verhältnis der gleitenden Mittelwerte. Aus der letzten Kurve ist sehr deutlich ein Extremwert zu einem Zeitpunkt zu erkennen, da der FC-Burst in seiner gesamten Länge wirksam geworden ist, also am Übergang vom FC-Burst zum Nachrichtensignal.

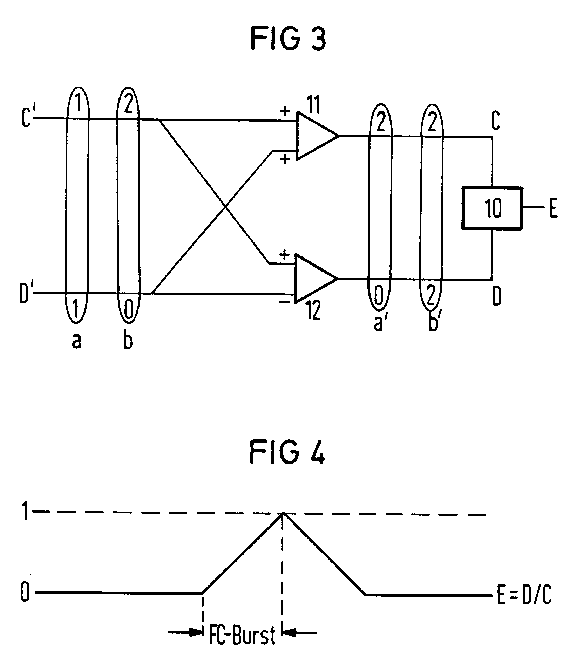

Eine Erweiterung der Schaltung mit dem Ziel, den Rechenbereich zu begrenzen, kann dadurch vorgenommen werden, daß in den beiden Pfaden zwischen der Anordnung zur Bildung des gleitenden Mittelwertes und der Divisionseinrichtung eine Additionsschaltung 11 bzw. eine Subtraktionsschaltung 12 eingeschaltet ist. Diesen Schaltungsteil von Figur 1 zwischen den Punkten C' und C und D' und D zeigt Figur 3. Den Eingängen jeder der beiden Schaltungen werden dabei die Signale beider Pfade zugeführt. Die in den Schleifen eingetragenen Zahlen 0,1 und 2 geben die Signalwerte am Ausgang der Anordnung zur gleitenden Mittelwertbildung und nach Durchlaufen der Additions- und Summationsschaltung an, wobei die mit a und a' bezeichneten für den normalen Signalverlauf gelten und die mit b und b' bezeichneten die Signalwerte beim Auftreten eines FC-Burst wiedergeben. Für das Verhältnis beider Signale an den Punkten D und C ergibt sich daraus der Wert 0 oder 1, wobei der Maximalwert 1 zu einem Zeitpunkt auftritt, wenn der FC-Burst in seiner gesamten Länge wirksam geworden ist (vgl. hierzu Fig. 4). Im Unterschied zur Darstellung von Fig. 2 ergibt sich hierbei für das Maximum immer ein sehr präziser Wert von 1 oder etwas kleiner, unabhängig von den Übertragungsbedingungen (Grundgeräusch, Frequenzversatz).

**Patentansprüche**

1. Schaltung zur Erkennung eines Frequenzreferenzsignals, das im Zeitmultiplex mit einem Nachrichtensignal ausgesendet wird, **gekennzeichnet durch** zwei Transversalfilter (1), die der Unterscheidung zwischen Nachrichtensignal und FC-Burst (frequency correction burst) aus dem in eine ZF-Lage umgesetzten und periodisch abgetasteten Empfangssignal dienen und dafür so ausgebildet sind, daß der Übertragungsfaktor des einen Filters bei der FC-Frequenz ein Minimum aufweist, während derjenige des anderen dort ein Maximum hat, und ferner durch je eine Einrichtung (2, 3) zur Bildung des Quadratwertes der Filterausgangssignale und eine sich jeweils daran anschließende Anordnung (4 bis 9) zur Bildung des gleitenden Mittelwertes über den Zeitraum einer Burstlänge und eine Einrichtung (10), in der die Ausgangsspannungen beider Pfade laufend zueinander ins Verhältnis gesetzt und der Zeitpunkt des Maximums ermittelt wird.

2. Schaltung nach Anspruch 1, **dadurch gekennzeichnet,** daß die beiden Transversalfilter (1) eine gemeinsame Verzögerung nT (T = 1/ft' ) und die Koeffizienten +1, +1 bzw. +1, -1 aufweisen und die Eigenschaft von Kammfiltern mit Übertragungsfaktoren cos(n f/ft') bzw. sin(n f/ft') haben.

3. Schaltung nach Anspruch 2, **dadurch gekennzeichnet,** daß der Faktor n der Transversalfilter (1) so gewählt ist, daß der Übertragungsfaktor der Filter bei der FC-Frequenz den jeweils gegensinnigen Wert Maximum/Minimum aufweist.

4. Schaltung nach einem der Ansprüche 1 bis 3, **dadurch gekennzeichnet,** daß die Anordnung (4 bis 9) zur Bildung des gleitenden Mittelwertes aus einem FIR- und einem IIR-Filter besteht.

5. Schaltung nach Anspruch 4, **dadurch gekennzeichnet,** daß die Mittelwerte aus dem FIR- und IIR-Filter laufend in ein RAM eingelesen und gleichzeitig miteinander verglichen werden und die RAM-Eingabe bei Erreichen einer aus dem Vergleich abgeleiteten Bedingung gestoppt wird.

6. Schaltung nach Anspruch 5, **dadurch gekennzeichnet,** daß die Bedingung im Absinken des laufenden Verhältnisses der Werte unter einen Schwellwert besteht, der so bemessen ist, daß er einmal sicher unterhalb des bei der Division zu erwartenden Extremwertes liegt und andererseits, im Hinblick auf die erforderliche RAM-Kapazität, eine möglichst geringe Anzahl von Wertepaaren erfaßt.

7. Schaltung nach Anspruch 6, **dadurch gekennzeichnet,** daß die RAMs eine Kapazität von ungefähr einer halben Burstlänge aufweisen.

8. Schaltung nach einem der vorhergehenden Ansprüche, **dadurch gekennzeichnet,** daß zwischen der Anordnung (4 bis 9) zur Bildung des gleitenden Mittelwertes und der Divisionseinrichtung (10) in dem einen Pfad eine Additionseinrichtung (11) und im anderen Pfad eine Subtraktionseinrichtung (12) eingeschaltet ist, deren beiden Eingängen jeweils das Ausgangssignal eines Pfades zugeführt wird.

9. Schaltung nach einem der vorhergehenden Ansprüche, **dadurch gekennzeichnet,** daß zwischen Transversalfilter (1) und Einrichtung (4 bis 9) zur Bildung des gleitenden Mittelwertes jeweils eine Einrichtung zur Absolutwertbildung der Filterausgangssignale eingeschaltet ist.

## Claims

1. Circuit for detecting a frequency reference signal which is transmitted in time-division multiplex with an information signal, characterized by two transversal filters (1) which are used for distinguishing between information signal and FC burst (frequency correction burst) from the received signal converted to an IF position and periodically sampled, and, for this purpose, are constructed in such a manner that the transfer factor of one filter exhibits a minimum at the FC frequency whilst that of the other one has a maximum at that point, and furthermore by one device (2, 3) each for forming the square value of the filter output signals and an arrangement (4 to 9), following in each case, for forming the moving average over the period of one burst length, and a device (10) in which the output voltages of both paths are continuously correlated with one another and the time of the maximum is determined.

2. Circuit according to Claim 1, characterized in that the two transversal filters (1) exhibit a common delay nT (T = 1/ft') and the coefficients +1, +1 and, respectively, +1, -1 and have the characteristic of comb filters with transfer factors of cos(n•f/ft') and, respectively, sin(n•f/ft').

3. Circuit according to Claim 2, characterized in that the factor n of the transversal filters (1) is selected in such a manner that the transfer factor of the filters exhibits the in each case opposite maximum/minimum value at the FC frequency.

4. Circuit according to one of Claims 1 to 3, characterized in that the arrangement (4 to 9) for forming the moving average consists of an FIR and an IIR filter.

5. Circuit according to Claim 4, characterized in that the averages from the FIR and IIR filter are continuously loaded into a RAM and are simultaneously compared with one another and the RAM input is stopped when a condition derived from the comparison has been reached.

6. Circuit according to Claim 5, characterized in that the condition consists in the dropping of the running ratio of the values below a threshold value which is dimensioned in such a manner that, on the one hand, it is reliably below the extreme value to be expected during the division and, on the other hand, it covers the least possible number of value pairs, having regard to the required RAM capacity.

7. Circuit according to Claim 6, characterized in that the RAMs exhibit a capacity of approximately one half burst length.

8. Circuit according to one of the preceding claims, characterized in that, between the arrangement (4 to 9) for forming the moving average and the dividing device (10), an addition device (11) is inserted in one path and a subtraction device (12) is inserted in the other path, the two inputs of which are in each case supplied with the output signal of one path.

9. Circuit according to one of the preceding claims, characterized in that, between the transversal filter (1) and the device (4 to 9) for forming the moving average, a device for forming the absolute value of the filter output signals is in each case inserted.

**Revendications**

1. Circuit pour la reconnaissance d'un signal de référence en fréquence, qui est émis en multiplexage temporel avec un signal de télécommunication, caractérisé par deux filtres transversaux (1), qui servent à différencier le signal de télécommunication du paquet-FC (frequency correction burst), à partir du signal de réception converti en une position-FI (fréquence intermédiaire) et échantillonné périodiquement, et qui sont, à cet effet, formés de telle sorte que le facteur de transmission de l'un des filtres présente un minimum, pour la fréquence FC, alors que l'autre filtre possède un maximum, pour cette même fréquence, et, en outre, par respectivement un dispositif (2,3) servant à la formation de la valeur quadratique du signal de sortie du filtre et un dispositif (4 à 9) relié au précédent et servant à la formation de la valeur moyenne glissante, sur la période d'une longueur de paquet, et par un dispositif (10) dans lequel les tensions de sortie des deux voies sont mises en rapport parallèlement ensemble et dans lequel l'instant du maximum est déterminé.

2. Circuit suivant la revendication 1, caractérisé en ce que les deux filtres transversaux (1) présentent un retard commun nT (T = 1/ft') et les coefficients +1, +1 ou +1, -1, et possèdent la caractéristique des filtres-peigne ayant des facteurs de transmission cos(n f/ft') ou sin-(n f/ft').

3. Circuit suivant la revendication 2, caractérisé en ce que le facteur n des filtres transversaux (1) est choisi de telle sorte que le facteur de transmission des filtres possède, pour la fréquence-FC, la valeur inverse maximale/minimale.

4. Circuit suivant l'une des revendications 1 à 3, caractérisé en ce que le dispositif (4 à 9) servant à la formation de la valeur moyenne glissante est constitué d'un filtre FIR (filtre à réponse impulsionnelle finie) et d'un filtre IIR (filtre à réponse impulsionnelle infinie).

5. Circuit suivant la revendication 4, caractérisé en ce que les valeurs moyennes obtenues à partir du filtre FIR et IIR sont mémorisées en continu dans une RAM (mémoire vive) et sont comparés simultanément entre elles, et que l'entrée de la RAM est bloquée, lors de l'obtention d'une condition qui dérive de la comparaison.

6. Circuit suivant la revendication 5, caractérisé en ce que la condition consiste en la diminution du rapport continu des valeurs en-dessous d'une valeur de seuil, qui est telle que, d'une part, elle se situe, de manière sure, en-dessous de la valeur extrême attendue lors de la division, et d'autre part, qu'elle comprenne, concernant la capacité nécessaire de la RAM, un nombre de couples de valeurs le plus faible possible.

7. Circuit suivant la revendication 6, caractérisé en ce que les RAM ont une capacité d'environ une demi-longueur de paquet.

8. Circuit suivant l'une des revendications précédentes, caractérisé en ce que, entre le dispositif (4 à 9) servant à la formation de la valeur moyenne glissante et le dispositif de division (10) est branché, dans l'une des voies, un dispositif additionneur (11), et dans l'autre voie, un dispositif de soustraction (12), dont les deux entrées reçoivent le signal de sortie d'une voie.

9. Circuit suivant l'une des revendications précédentes, caractérisé en ce que, entre les filtres transversaux (1) et le dispositif (4 à 9) servant à la formation de' la valeur moyenne glissante, est branché un dispositif servant à la formation, en valeur absolue, du signal de sortie des filtres.

## FIG 1

## FIG 2

# FIG 3

# FIG 4